# EUROPEAN PATENT APPLICATION

(11) **EP 4 797 734 A1**
(43) Date of publication of application: **26.08.2026**
(21) Application number: 24890567.1
(22) Date of filing: 07.11.2024
(51) Int. Cl.: H04W 4/02, G01S 5/02

(54) **POSITION DETERMINING METHOD AND RELATED APPARATUS**

(30) Priority: 14.11.2023 CN 202311519748
(71) Applicant: HUAWEI TECHNOLOGIES CO., LTD., Shenzhen 518129 (CN)
(72) Inventor: WANG, Xiaochao, Shenzhen, Guangdong 518129 (CN); ZHANG, Yu, Shenzhen, Guangdong 518129 (CN); HU, Xiaotong, Shenzhen, Guangdong 518129 (CN); LING, Xuemeng, Shenzhen, Guangdong 518129 (CN); LI, Zekai, Shenzhen, Guangdong 518129 (CN)
(74) Representative: Gill Jennings & Every LLP
(86) International application number: PCT/CN2024/130651
(87) International publication number: WO 2025/103211

(57) **Abstract**

This application provides a location determining method and a related apparatus, and may be used in the field of wireless communication technologies. In technical solutions provided in this application, a first AP may determine a location of a STA in a BSS in which the first AP is located in a first coordinate system, and determine locations of a second AP and a second STA in an OBSS in the first coordinate system, where an origin of the first coordinate system is the first AP. In the method, the first AP may determine the BSS in which the first AP is located and a location of each communication device in the OBSS. The method does not limit a quantity of positioning devices in a communication system, and has a wide range of application scenarios.

## Description

This application claims priority to Chinese Patent Application No. 202311519748.8, filed with the China National Intellectual Property Administration on November 14, 2023 and entitled "LOCATION DETERMINING METHOD AND RELATED APPARATUS", which is incorporated herein by reference in its entirety.

### TECHNICAL FIELD

This application relates to the field of wireless communication technologies, and in particular, to a location determining method and a related apparatus.

### BACKGROUND

In a wireless communication technology, a location of a communication device may be determined by using a wireless sensing technology. A digital map is a map that stores the location of the communication device in a digital manner and is used to query the location of the communication device. Transmission performance of the communication device can be improved based on the wireless sensing technology and the digital map. A prerequisite for using the digital map is to construct the digital map.

The core of constructing the digital map is to construct a coordinate system. Currently, the digital map may be constructed based on a global coordinate system. When the digital map is constructed based on the global coordinate system, the communication device needs to be positioned in a manner of positioning a single point based on a plurality of points. For example, a location of a station (station, STA) is determined via at least three positioning devices.

However, in the method, a communication system is required to include the at least three positioning devices. Consequently an application scenario is limited.

### SUMMARY

This application provides a location determining method and a related apparatus. On a basis of positioning a single point based on a plurality of points in a global coordinate system, a local coordinate system whose coordinate origin is an access point AP may be further used. This application is compatible with the manner of positioning the single point based on the plurality of points, and may further use a manner of positioning a single point based on a single point, to resolve a problem that an application scenario is limited in a conventional technology.

According to a first aspect, this application provides a location determining method. The method includes: determining a location of a first station STA in a first coordinate system, where the first STA accesses a network via a first access point AP, and an origin of the first coordinate system is the first AP; determining a location of a second AP in the first coordinate system; and determining a location of a second STA in the first coordinate system, where the second STA accesses the network via the second AP.

The method may be applied to the first AP. Specifically, the method may be performed by the first AP, or may be performed by a chip used in the first AP.

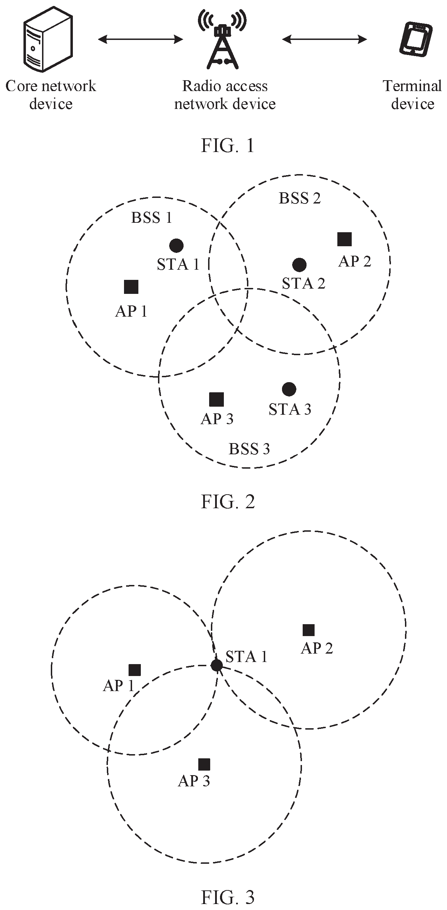

For example, the first AP may be any one in a radio access network device shown in FIG. 1.

The first AP and the first STA may be located in a same BSS. There may be at least one first STA.

The first AP and the second AP are located in different BSSs.

The second AP and the second STA may be located in a same BSS. There may be at least one second STA.

For example, it is assumed that the first AP and the first STA are located in a BSS 1, the second AP and the second STA are located in a BSS 2, and the BSS 1 overlaps the BSS 2, in other words, the BSS 1 is an OBSS of the BSS 2, and the BSS 2 is an OBSS of the BSS 1.

In the method, the first AP may determine the BSS in which the first AP is located and a location of each communication device in the OBSS. The method does not limit a quantity of positioning devices in a communication system, and has a wide range of application scenarios.

In some possible implementations, determining the location of the second STA in the first coordinate system includes: obtaining first location information, where the first location information indicates a location of the first AP in a second coordinate system, and an origin of the second coordinate system is the second AP; obtaining second location information, where the second location information indicates a location of the second STA in the second coordinate system; and determining the location of the second STA in the first coordinate system based on the location of the second AP in the first coordinate system and the location of each device in the first AP and the second STA in the second coordinate system.

In the method, the first location information may be sent by the second AP. For example, the second AP may first determine the location of the first AP in the second coordinate system, and then send the first location information to the first AP. Correspondingly, the first AP receives the first location information.

The second location information may be sent by the second AP. For example, the second AP may first determine a location of the second STA in the second coordinate system, and then send an information frame to the second STA, where the information frame may carry the second location information. Correspondingly, the first AP may obtain the second location information in a listening manner.

In the method, the first AP may obtain the first location information and the second location information. This helps the first AP determine a location of each communication device in the OBSS in the first coordinate system based on the information, thereby facilitating construction of a digital map.

Optionally, after obtaining the first location information, the first AP may further send third location information to the second AP, where the third location information indicates a location of the second AP in the first coordinate system.

In some possible implementations, the location of the second AP in the first coordinate system satisfies the following formula: $\left\{\begin{matrix}x = \frac{- \left(ad-bc\right) y ′ - \left(ac+bd\right) x ′}{\sqrt{{a}^{2} + {b}^{2}} ⋅ \sqrt{{c}^{2} + {d}^{2}}} + a \\ y = \frac{\left(ad-bc\right) x ′ - \left(ac+bd\right) y ′}{\sqrt{{a}^{2} + {b}^{2}} ⋅ \sqrt{{c}^{2} + {d}^{2}}} + b\end{matrix}\right. ,$ where
a is a coordinate value of the second AP on a first coordinate axis in the first coordinate system, b is a coordinate value of the second AP on a second coordinate axis in the first coordinate system, c is a coordinate value of the first AP on a first coordinate axis in the second coordinate system, d is a coordinate value of the first AP on a second coordinate axis in the second coordinate system, *x'* is a coordinate value of the second STA on the first coordinate axis in the second coordinate system, *x'* is a coordinate value of the second STA on the second coordinate axis in the second coordinate system, *x* is a coordinate value of the second STA on the first coordinate axis in the first coordinate system, and *y* is a coordinate value of the second STA on the second coordinate axis in the first coordinate system.

In this example, the first coordinate system and the second coordinate system are two-dimensional coordinate systems.

The first AP may determine, according to the method, a coordinate value of each STA in the OBSS on each coordinate axis in the first coordinate system, thereby facilitating construction of the digital map.

Optionally, in some implementations, the first coordinate system and the second coordinate system may alternatively be three-dimensional coordinate systems.

In some possible implementations, the location of each device in the second coordinate system includes a coordinate value of the device on each coordinate axis in the second coordinate system, the coordinate value of each device on each coordinate axis in the second coordinate system is indicated in a first manner, and the first manner includes indicating the location by using a bit value.

In the method, the location of the first AP in the second coordinate system includes a coordinate value of the first AP on the first coordinate axis in the second coordinate system and a coordinate value of the first AP on the second coordinate axis in the second coordinate system. The coordinate value of the first AP on the first coordinate axis in the second coordinate system may be represented by a bit value, and the coordinate value of the first AP on the second coordinate axis in the second coordinate system may also be represented by a bit value.

The location of the second STA in the second coordinate system includes a coordinate value of the second STA on the first coordinate axis in the second coordinate system and a coordinate value of the second STA on the second coordinate axis in the second coordinate system. The coordinate value of the second STA on the first coordinate axis in the second coordinate system may be represented by using a bit value, and the coordinate value of the second STA on the second coordinate axis in the second coordinate system may also be represented by using a bit value.

In the method, because a quantity of bits of the bit value may be a small quantity of bits, when the coordinate value of each device on each coordinate axis in the second coordinate system is indicated by using the bit value, a large coordinate value range may be represented by using the small quantity of bits. This helps reduce transmission overheads.

Optionally, the location of the second AP in the first coordinate system may include a coordinate value of the second AP on the first coordinate axis in the first coordinate system and a coordinate value of the second AP on the second coordinate axis in the first coordinate system. The coordinate value of the second AP on the first coordinate axis in the first coordinate system may be represented by using a bit value, and the coordinate value of the second AP on the second coordinate axis in the first coordinate system may also be represented by using a bit value.

In some possible implementations, the bit value of the coordinate value of each device on each coordinate axis in the second coordinate system is in a logarithmic relationship with the coordinate value of each device on each coordinate axis in the second coordinate system.

In the method, the bit value of the coordinate value of each device on each coordinate axis in the second coordinate system may be in the logarithmic relationship with the coordinate value of each device on each coordinate axis in the second coordinate system. In this way, location precision may be high when the coordinate value on each coordinate axis in the second coordinate system is less than or equal to a preset distance threshold, or location precision may be low when the coordinate value on each coordinate axis in the second coordinate system is greater than a preset distance threshold.

The location precision herein may represent a variation of the coordinate value on each coordinate axis in the second coordinate system when the bit value of the coordinate value on each coordinate axis in the second coordinate system increases by 1.

A level of the location precision is associated with a value of the location precision. A smaller value of the location precision indicates that more bit values correspond to a same distance range, and the location precision is higher.

The preset distance threshold may be preset, and the preset distance threshold may be associated with a positioning distance. For example, in an indoor positioning scenario, an indoor positioning distance is usually less than or equal to 20 m, and the preset distance threshold may be 20 m.

Because an indoor signal transmission distance is usually about 20 m, a large quantity of signals are usually transmitted within a range less than or equal to 20 m, and a small quantity of signals may be transmitted within a range exceeding 20 m.

In this application, a larger quantity of bit values may be used to represent a distance range in which the large quantity of signals are transmitted, and a smaller quantity of bit values may be used to represent a distance range in which the small quantity of signals are transmitted. This helps improve data transmission accuracy.

In some possible implementations, each of the first location information and the second location information is transmitted via a first-type data frame, the first-type data frame includes a first field and a second field, the first field stores a bit value of a location, and the second field indicates that the first-type data frame includes the first field.

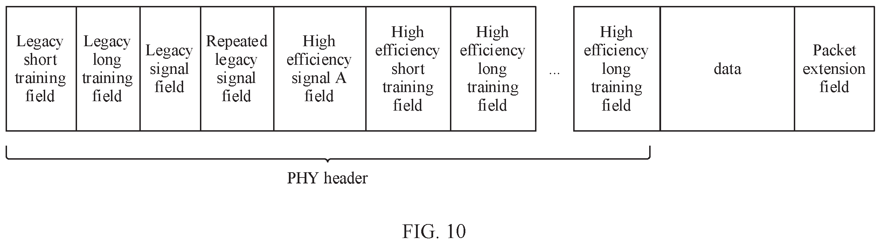

In the method, the first-type data frame may be a data frame in a physical layer protocol data unit (physical layer protocol data unit, PPDU) frame format. An example of the PPDU frame format may be shown in FIG. 10.

Optionally, the first-type data frame may include a first data frame and a second data frame.

Optionally, the first location information may be transmitted via the first data frame. The first data frame may include the first field and the second field. The first field in the first data frame stores a bit value of the location of the first AP in the second coordinate system, and the second field in the first data frame indicates that the first data frame includes the first field.

In the method, when receiving the first data frame, the first AP may first determine, based on the second field in the first data frame, that the first data frame includes the first field, and then obtain the first location information from the first field when determining that the first data frame includes the first field, thereby avoiding some unnecessary resource waste.

Optionally, the first location information may alternatively be transmitted via an empty data frame that includes only a MAC header. This helps reduce the transmission overheads.

Optionally, the second location information may be transmitted via the second data frame. The second data frame may include the first field and the second field. The first field in the second data frame stores a bit value of the location of the second STA in the second coordinate system, and the second field in the second data frame indicates that the second data frame includes the first field.

In the method, when receiving the second data frame, the first AP may first determine, based on the second field in the second data frame, that the second data frame includes the first field, and then obtain the second location information from the first field in the second data frame when determining that the second data frame includes the first field, thereby avoiding some unnecessary resource waste.

Optionally, the third location information may also be transmitted via the first-type data frame. For example, the third location information may be transmitted via a third data frame. The third data frame may include the first field and the second field. The first field in the third data frame stores a bit value of the location of the second AP in the first coordinate system, and the second field in the third data frame indicates that the third data frame includes the first field.

Optionally, the third location information may alternatively be transmitted via an empty data frame that includes only a MAC header. This helps reduce the transmission overheads.

In some possible implementations, the first-type data frame includes a media access control MAC header, and the first field and the second field are located in the MAC header.

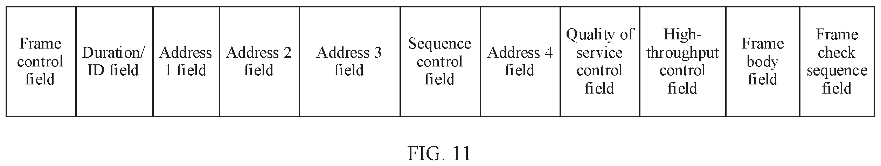

An example of the MAC header may be shown in FIG. 11.

In this example, the first field may be an HT control field in the MAC header, and the second field may be a frame control field in the MAC header. Optionally, in some embodiments, the second field may be a +HTC/Order field in the frame control field in the MAC header.

In the method, a value of the second field may be 1, indicating that the MAC header includes the first field.

Optionally, the first data frame may include one MAC header. When the first location information is transmitted via the first data frame, the MAC header in the first data frame may include the first field and the second field, the first field stores the first location information, and the second field indicates that the first data frame includes the first field.

Optionally, the second data frame may include at least one MAC header. When the second location information is transmitted via the second data frame, a 1^{st} MAC header in the at least one MAC header in the second data frame may include the first field and the second field, the first field stores the second location information, and the second field indicates that the first data frame includes the first field.

In other words, the second location information may be carried in a first MAC header. This helps reduce data transmission overheads.

In the method, because information in the MAC header may not be encrypted, the first AP can easily listen to and parse the first location information or the second location information.

In some possible implementations, the first-type data frame further includes a third field, the third field stores first indication information and second indication information, the first indication information indicates that a device supports construction of the digital map, and the second indication information indicates that the first-type data frame includes the bit value of the location.

In the method, when receiving the first data frame, the first AP may first determine, based on the third field in the first data frame, whether the first data frame includes the first location information, and then obtain the first location information from the first field in the first data frame when determining that the first data frame includes the first location information, thereby avoiding some unnecessary resource waste.

In the method, when receiving the second data frame, the first AP may first determine, based on the third field in the second data frame, whether the second data frame includes the second location information, and then obtain the second location information from the first field in the second data frame when determining that the second data frame includes the second location information, thereby avoiding some unnecessary resource waste.

Optionally, when receiving the third data frame, the second AP may first determine, based on the third field in the third data frame, whether the third data frame includes the third location information, and then obtain the third location information from the first field in the third data frame when determining that the third data frame includes the third location information, thereby avoiding some unnecessary resource waste.

In some possible implementations, the third field is located in a physical layer PHY header.

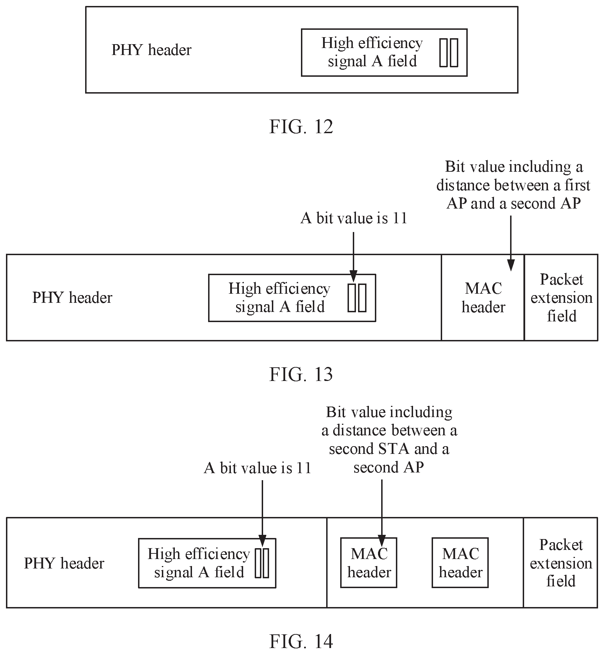

An example of the PHY header may be shown in FIG. 12. In this example, the third field may be an HE-SIG-A field (or a SIG-A field field) at a PHY layer.

In this example, the third field may include two bits, where the first bit may be the first indication information, and the second bit may be the second indication information.

For example, when the first location information is transmitted via the first data frame, a value of the first indication information in the first data frame may be 1, indicating that the device supports construction of the digital map; and a value of the second indication information in the first data frame may also be 1, indicating that the first data frame includes the first location information.

For another example, when the second location information is transmitted via the second data frame, a value of the first indication information in the second data frame may be 1, indicating that the device supports construction of the digital map; and a value of the second indication information in the second data frame may also be 1, indicating that the second data frame includes the second location information.

According to a second aspect, this application provides a location determining apparatus, including modules or units configured to implement the method according to any one of the first aspect or the possible implementations of the first aspect. It should be understood that each module or unit may implement a corresponding function by executing a computer program.

For example, the location determining apparatus may include a determining module.

The determining module may be configured to determine a location of a first station STA in a first coordinate system, where the first STA accesses a network via a first access point AP, and an origin of the first coordinate system is the first AP.

The determining module may be further configured to determine a location of a second AP in the first coordinate system.

The determining module may be further configured to determine a location of a second STA in the first coordinate system, where the second STA accesses the network via the second AP.

In some possible designs, the location determining apparatus may further include an obtaining module.

The obtaining module may be configured to obtain first location information, where the first location information indicates a location of the first AP in a second coordinate system, and an origin of the second coordinate system is the second AP.

The obtaining module may be further configured to obtain second location information, where the second location information indicates a location of the second STA in the second coordinate system.

The determining module may be configured to determine the location of the second STA in the first coordinate system based on the location of the second AP in the first coordinate system and the location of each device in the first AP and the second STA in the second coordinate system.

In some possible designs, the location of the second AP in the first coordinate system satisfies the following formula: $\left\{\begin{matrix}x = \frac{- \left(ad-bc\right) y ′ - \left(ac+bd\right) x ′}{\sqrt{{a}^{2} + {b}^{2}} ⋅ \sqrt{{c}^{2} + {d}^{2}}} + a \\ y = \frac{\left(ad-bc\right) x ′ - \left(ac+bd\right) y ′}{\sqrt{{a}^{2} + {b}^{2}} ⋅ \sqrt{{c}^{2} + {d}^{2}}} + b\end{matrix}\right. ,$ where
a is a coordinate value of the second AP on a first coordinate axis in the first coordinate system, b is a coordinate value of the second AP on a second coordinate axis in the first coordinate system, c is a coordinate value of the first AP on a first coordinate axis in the second coordinate system, d is a coordinate value of the first AP on a second coordinate axis in the second coordinate system, x' is a coordinate value of the second STA on the first coordinate axis in the second coordinate system, y' is a coordinate value of the second STA on the second coordinate axis in the second coordinate system, x is a coordinate value of the second STA on the first coordinate axis in the first coordinate system, and y is a coordinate value of the second STA on the second coordinate axis in the first coordinate system.

In some possible designs, the location of each device in the second coordinate system includes a coordinate value of the device on each coordinate axis in the second coordinate system, the coordinate value of each device on each coordinate axis in the second coordinate system is indicated in a first manner, and the first manner includes indicating the location by using a bit value.

In some possible designs, a bit value of the coordinate value of each device on each coordinate axis in the second coordinate system is in a logarithmic relationship with the coordinate value of each device on each coordinate axis in the second coordinate system.

In some possible designs, each of the first location information and the second location information is transmitted via a first-type data frame, the first-type data frame includes a first field and a second field, the first field stores a bit value of a location, and the second field indicates that the first-type data frame includes the first field.

In some possible designs, the first-type data frame includes a media access control MAC header, and the first field and the second field are located in the MAC header.

In some possible designs, the first-type data frame further includes a third field, the third field stores first indication information and second indication information, the first indication information indicates that a device supports construction of a digital map, and the second indication information indicates that the first-type data frame includes the bit value of the location.

In some possible designs, the third field is located in a physical layer PHY header.

According to a third aspect, this application provides a location determining apparatus, including a processor. The processor is configured to perform the method according to any one of the possible implementations of the first aspect.

The apparatus may further include a memory configured to store instructions and data. The memory is coupled to the processor, and when executing the instructions stored in the memory, the processor can implement the method described in the foregoing aspects. The apparatus may further include a communication interface. The communication interface is used by the apparatus to communicate with another device. For example, the communication interface may be a transceiver, a circuit, a bus, a module, or another type of communication interface.

According to a fourth aspect, this application provides a computer-readable storage medium. The computer-readable storage medium stores program code executed by an apparatus, and the program code includes instructions used to implement the method according to any one of the possible implementations of the first aspect.

According to a fifth aspect, this application provides a computer program product including instructions. When the computer program product runs on an apparatus, the apparatus is enabled to implement the method according to any one of the possible implementations of the first aspect.

It may be understood that for effect that may be obtained in the second aspect to the fifth aspect, refer to the descriptions in the first aspect. Details are not described herein.

### BRIEF DESCRIPTION OF DRAWINGS

FIG. 1 is a diagram of a communication system according to an embodiment of this application;
FIG. 2 is a diagram of a BSS according to an embodiment of this application;
FIG. 3 is a diagram of positioning a STA based on at least three APs according to an embodiment of this application;
FIG. 4 is a schematic flowchart of a location determining method according to an embodiment of this application;
FIG. 5 is a diagram of another BSS according to an embodiment of this application;
FIG. 6 is a diagram of a first coordinate system and a second coordinate system according to an embodiment of this application;
FIG. 7 is a diagram of a relationship between a coordinate value of any device on any coordinate axis in a second coordinate system and a bit value of the coordinate value of the any device on the any coordinate axis according to an embodiment of this application;
FIG. 8 is a diagram of a relationship between a coordinate value of any device on any coordinate axis in a second coordinate system and a bit value of the coordinate value of the any device on the any coordinate axis according to another embodiment of this application;
FIG. 9 is a diagram of a relationship between location precision and a first parameter t1 according to an embodiment of this application;
FIG. 10 is a diagram of a PPDU frame format;
FIG. 11 is a diagram of a MAC header;
FIG. 12 is a diagram of a PHY header;
FIG. 13 is a diagram of a first data frame;
FIG. 14 is a diagram of a second data frame;
FIG. 15 is a diagram of a location determining apparatus according to an embodiment of this application; and
FIG. 16 is a diagram of a location determining apparatus according to another embodiment of this application.

### DESCRIPTION OF EMBODIMENTS

The following describes technical solutions in embodiments of this application with reference to accompanying drawings in embodiments of this application.

For ease of clearly describing the technical solutions in embodiments of this application, terms such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, the term "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c each may be singular or plural.

A method in this application may be applied to various communication systems, for example, a long term evolution (long term evolution, LTE) system, a 5th generation (5th generation, 5G) communication system or new radio (new radio, NR), a non-terrestrial network (non-terrestrial network, NTN), and a future communication system like a 6th generation (6th generation, 6G) communication system. This is not limited in the present invention.

The following describes in detail embodiments of this application with reference to the accompanying drawings.

To facilitate understanding of embodiments of this application, a communication system applicable to embodiments of this application is first described with reference to FIG. 1. As shown in FIG. 1, the communication system includes a core network device, a radio access network device, and a terminal device.

The terminal device may be connected to the radio access network device in a wireless manner, and the radio access network device may be connected to the core network device in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. Terminal devices may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device, which are not shown in FIG. 1.

The radio access network (wireless access network, RAN) device may be a device having a wireless transceiver function. The radio access network device may be a device that provides a wireless communication function service, is usually located on a network side, and includes but is not limited to a next generation NodeB (gNodeB, gNB) in a 5G communication system, a next generation base station in a 6th generation (6th generation, 6G) mobile communication system, a base station in a future mobile communication system, an access point (access point, AP) in a Wi-Fi system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home NodeB (for example, a home evolved NodeB or a home NodeB, HNB), a baseband unit (baseband unit, BBU), a transmission reception point (transmission reception point, TRP), a transmission point (transmission point, TP), a base transceiver station (base transceiver station, BTS), or the like. In a network structure, the access network device may include at least one of a central unit (central unit, CU), a distributed unit (distributed unit, DU), and a radio unit (radio unit, RU). The access network device provides a service for a cell. User equipment communicates with a base station using a transmission resource (for example, a frequency domain resource, or a frequency spectrum resource) used by the cell. The cell may be a cell corresponding to the base station (for example, the base station). The cell may belong to a macro base station, or a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service. The radio access network device may be a satellite, or may be a macro base station, or may be a micro base station or an indoor base station, or may be a relay node or a donor node, a device that provides a wireless communication service for user equipment, a radio controller in a cloud radio access network (cloud radio access network, CRAN) scenario, a relay station, a vehicle-mounted device, a wearable device, a network device in a future evolved network, or the like. The access network device in this embodiment may alternatively be an open-radio access network (open-radio access network, O-RAN) device. The O-RAN device may include at least one of an open distributed unit (open-distributed unit, O-DU), an open central unit (open-central unit, O-CU), and an open-radio unit (open-radio unit, O-RU). Optionally, the access network device in this embodiment may alternatively be a wireless router, for example, a wireless gateway or a wireless bridge.

A specific technology and a specific device form that are used by the radio access network device are not limited in embodiments of this application. For ease of description, the following uses an example in which an AP serves as the radio access network device for description.

The terminal device may also be referred to as a terminal, user equipment (user equipment, UE), a mobile station (mobile station, MS), a mobile terminal (mobile terminal, MT), a station (station, STA), or the like, and may be an entity configured to receive or transmit a signal on a user side, for example, a mobile phone. The terminal device includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in smart grid, a wireless terminal in smart city (smart city), a wireless terminal in smart home (smart home), or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. In embodiments of this application, an apparatus configured to implement a function of the terminal may be a terminal, or may be an apparatus, for example, a chip system, a communication module, or a modem, that can support the terminal in implementing a function. The apparatus may be installed in the terminal. In embodiments of this application, the chip system may include a chip, or may include a chip and another discrete component. In the technical solutions provided in embodiments of this application, an example in which the apparatus configured to implement the function of the terminal is a terminal is used to describe the technical solutions provided in embodiments of this application. A specific technology and a specific device form that are used by the terminal device are not limited in embodiments of this application.

In this application, a quantity of radio access network devices and a quantity of terminal devices may not be limited. For example, there may be at least one radio access network device, and each of the at least one radio access network device may be connected to at least one terminal device.

In this application, the radio access network device and the terminal device may be deployed on land, including being deployed indoor or outdoor, handheld, or vehicle-mounted, may be deployed on water, or may be deployed on an airplane, a balloon, or a satellite in air. Application scenarios of the radio access network device and the terminal device are not limited in embodiments of this application.

Embodiments of this application are applicable to downlink signal transmission, are applicable to uplink signal transmission, and are further applicable to device-to-device (Device-To-Device, D2D) signal transmission. For the downlink signal transmission, a sending device is the radio access network device, and correspondingly a receiving device is the terminal device. For the uplink signal transmission, a sending device is the terminal device, and correspondingly a receiving device is the radio access network device. For the D2D signal transmission, a sending device is a terminal device, and correspondingly a receiving device is also a terminal device. A signal transmission direction is not limited in embodiments of this application.

Communication between the radio access network device and the terminal device and communication between the terminal devices may be performed by using a licensed spectrum, an unlicensed spectrum, or both a licensed spectrum and an unlicensed spectrum. A spectrum below 6 GHz, a spectrum above 6 GHz, or both a spectrum below 6 GHz and a spectrum above 6 GHz may be used for communication between the radio access network device and the terminal device, and between the terminal devices. Spectrum resources used by the radio access network device and the terminal device are not limited in embodiments of this application.

The system may include at least one basic service set (basic service set, BSS), and the BSS is used to describe a group of communication devices that communicate with each other in a wireless network. A BSS may or may not include an AP. There are two types of BSSs: One is a basic service set in an infrastructure mode, which includes one AP and several STAs; and the other is a basic service set in an independent mode, which includes several STAs, where one of the STAs acts as a primary STA. Each BSS has a unique identifier. BSSs that are in close proximity and have overlapping coverage areas are referred to as overlapping basic service sets (Overlapping Basic Service Set, OBSS).

As shown in FIG. 2, it is assumed that the communication system includes a BSS 1, a BSS 2, and a BSS 3. The BSS 1 includes an AP 1 and a STA 1, the BSS 2 includes an AP 2 and a STA 2, and the BSS 3 includes an AP 3 and a STA 3.

In this example, if every two of the BSS 1, the BSS 2, and the BSS 3 overlap, the BSS 2 and the BSS 3 may be OBSSs of the BSS 1, the BSS 1 and the BSS 3 may be OBSSs of the BSS 2, and the BSS 1 and the BSS 2 may be OBSSs of the BSS 31.

In a wireless communication technology, a location of a communication device may be determined by using a wireless sensing technology. For example, indoor positioning is performed by using vision, infrared ray, ultrasonic wave, a radio frequency identification (radio frequency identification, RFID) technology, Bluetooth, wireless fidelity (wireless fidelity, Wi-Fi), ultra-wideband (ultra-wideband, UWB), ZigBee (ZigBee), and an inertial device.

A digital map is a map that stores a location of a communication device in a digital manner and is used to query the location of the communication device. In some embodiments, the digital map may be alternatively represented by another name. For example, the digital map may be also referred to as an electronic map.

Transmission performance of the communication device can be improved based on the wireless sensing technology and the digital map. The communication device may include an AP and a STA.

A prerequisite for using the digital map is to construct the digital map. The core of constructing the digital map is to construct a coordinate system. Currently, the digital map may be constructed based on a global coordinate system. When the digital map is constructed based on the global coordinate system, the communication device needs to be positioned in a manner of positioning a single point based on a plurality of points. In this application, positioning the single point based on the plurality of points may be understood as determining a location of one communication device by using at least three positioning devices.

Optionally, a method of positioning the single point based on the plurality of points may include Wi-Fi/Bluetooth trilateration positioning, UWB multi-anchor positioning, RFID positioning, and the like.

As shown in FIG. 3, it is assumed that the communication system includes three APs and at least one STA, and each of the three APs may communicate with each of the at least one STA.

It is assumed that the three APs are respectively an AP 1, an AP 2, and an AP 3, and the AP 1, the AP 2, and the AP 3 may collaboratively position each of the at least one STA. The AP 1, the AP 2, and the AP 3 are positioning devices.

For example, it is assumed that the at least one STA includes a STA 1. The AP 1, the AP 2, and the AP 3 may separately calculate distances between the AP 1, the AP 2, and the AP 3 and the STA 1 based on signal arrival time of the STA 1, separately use the AP 1, the AP 2, and the AP 3 as origins, and separately draw circles by using the distances between the AP 1, the AP 2, and the AP 3 and the STA 1 as radii, finally determine a location of the STA 1 at an intersection point of the three circles drawn by the three APs, and then determine a coordinate location of the STA 1 in a coordinate system based on coordinate locations of the AP 1, the AP 2, and the AP 3.

In this example, the coordinate system is a global coordinate system. For example, the global coordinate system may be a world coordinate system or a geodetic coordinate system.

In the method, the at least three positioning devices need to be used to cooperatively position each STA. Consequently, an application scenario is limited.

Currently, the positioning method may further include a method of positioning a single point based on a single point. The method of positioning the single point based on the single point may include fingerprint recognition or a positioning manner based on channel state information (channel state information, CSI).

In view of this, this application provides a location determining method. On a basis of positioning the single point based on the plurality of points in the global coordinate system, a local coordinate system whose coordinate origin is an AP may be further used. This application is compatible with the manner of positioning the single point based on the plurality of points, and may further use the manner of positioning the single point based on the single point, to resolve a problem that the application scenario is limited in the conventional technology.

In the technical solutions of this application, a first AP may determine a location of a first STA in a first coordinate system and a location of a second AP in the first coordinate system, and determine a location of a second STA in the first coordinate system based on the location of the second AP in the first coordinate system.

An origin of the first coordinate system is the first AP, and the first AP may be any AP in a communication system.

The first AP and the first STA may be located in a first BSS, and the first STA may access a network via the first AP. There may be at least one first STA.

The second AP and the second STA may be located in a second BSS, and the second STA may access the network via the second AP. There may be at least one second STA, and the first AP and the second AP may communicate with each other.

Optionally, the first AP may further obtain a location of the first AP in a second coordinate system and a location of the second STA in the second coordinate system, and then determine the location of the second STA in the first coordinate system based on the location of the second AP in the first coordinate system, the location of the first AP in the second coordinate system, and the location of the second STA in the second coordinate system.

An origin of the second coordinate system is the second AP.

In the method, a coordinate system used to determine the location is a coordinate system constructed by using the first AP as an origin, and the first AP may determine a location of each STA in a BSS in which the first AP is located. In addition, when there are a plurality of APs, the first AP may further transform the location of the second STA in the second coordinate system into the location of the second STA in the first coordinate system, and may transform a location of the second AP in the second coordinate system into the location of the second AP in the first coordinate system. In other words, the AP may transform locations of communication devices in different coordinate systems into locations in a same coordinate system, and then construct a digital map based on the locations of the devices in the same coordinate system. In the method, a quantity of APs in the communication system is not limited, and the method has a wide range of application scenarios.

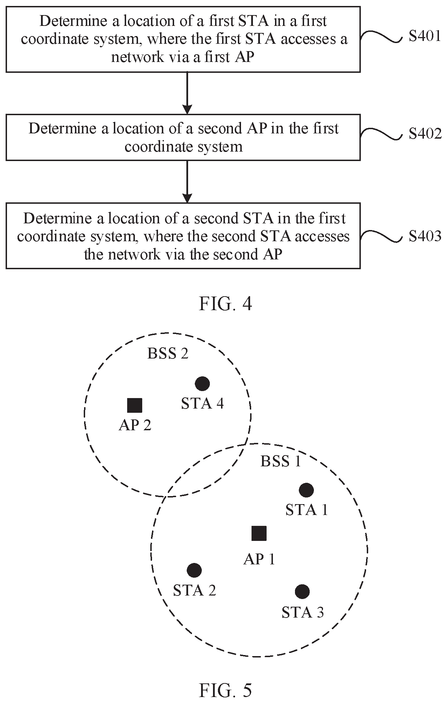

The following describes the method in this application in detail with reference to FIG. 4 to FIG. 16.

FIG. 4 is a schematic flowchart of a location determining method according to an embodiment of this application. As shown in FIG. 4, the method may include S401 to S403.

The method may be applied to a first AP. Specifically, the method may be performed by the first AP, or may be performed by a chip used in the first AP. The following uses an example in which the method is performed by the first AP for description. Processing described below as being performed by a single execution body may alternatively be divided into processing performed by a plurality of execution bodies. These execution bodies may be logically and/or physically separated. For example, processing performed by an AP may be divided into processing performed by at least one of a CU, a DU, and an RU.

For example, the first AP may be any one in the radio access network device shown in FIG. 1.

In the method, a coordinate system used for determining a location may be a first coordinate system, and an origin of the first coordinate system is the first AP. Optionally, the first coordinate system may be constructed by the first AP.

S401: Determine a location of a first STA in the first coordinate system, where the first STA accesses a network via the first AP.

In the method, the first AP and the first STA may be located in a same BSS. There may be at least one first STA.

As shown in FIG. 5, it is assumed that the first AP is an AP 1, a BSS in which the AP1 is located is a BSS 1, and the BSS 1 further includes a STA 1, a STA 2, and a STA 3. In this case, the first STA may include the STA 1, the STA 2, and the STA 3.

In this example, the AP 1 may perform location sensing on the STA 1, the STA 2, and the STA 3, to determine locations of the STA 1, the STA 2, and the STA 3 in the first coordinate system.

Optionally, the first coordinate system may be a two-dimensional coordinate system, or may be a three-dimensional coordinate system.

For example, the first coordinate system is a two-dimensional coordinate system. The first coordinate system may include a first coordinate axis and a second coordinate axis. The first coordinate axis and the second coordinate axis in the first coordinate system are parallel to the ground and are perpendicular to each other.

For example, it is assumed that a coordinate value of the STA 1 in a first coordinate axis direction in the first coordinate system is X1, and a coordinate value of the STA 1 on the second coordinate axis in the first coordinate system is Y1. In this case, the location of the STA 1 in the first coordinate system may be represented as (X1, Y1).

In this application, a method for the AP 1 to perform location sensing on the STA 1, the STA 2, and the STA 3 may not be limited. For example, the AP 1 may perform location sensing on the STA 1, the STA 2, and the STA 3 in a fingerprint recognition-based or CSI-based manner of positioning a single point based on a single point, or may perform location sensing on the STA 1, the STA 2, and the STA 3 in a UWB or Wi-Fi trilateration-based manner of positioning a single point based on a plurality of points.

Optionally, when the AP 1 performs location sensing on the STA 1, the STA 2, and the STA 3, the AP 1 may periodically perform location sensing on the STA 1, the STA 2, and the STA 3. Different STAs may correspond to different sensing periodicities, and a sensing periodicity corresponding to each STA may be preset.

For example, if the STA 1 is a fixed device, for example, a large-scale household appliance internet of things (internet of things, IOT) device, a sensing periodicity of the STA 1 may be a large value. For example, if the STA 1 is the fixed device, the sensing periodicity may be 500 milliseconds (ms).

For another example, if the STA 2 is a mobile device, for example, a mobile phone, a sensing periodicity of the STA 2 may be a small value. For example, if the STA 2 is the mobile device, the sensing periodicity may be 4 ms.

Optionally, after performing location sensing on the STA 1, the STA 2, and the STA 3, the AP 1 may obtain location information of each STA in the STA 1, the STA 2, and the STA 3, and store a location of each STA in the AP 1. The location information of each STA indicates a location of the STA in the first coordinate system.

Optionally, when storing the location information of each STA, the AP 1 may use a media access control (media access control, MAC) address corresponding to the STA as a unique identity of the STA.

S402: Determine a location of a second AP in the first coordinate system.

In the method, the first AP and the second AP are located in different BSSs.

As shown in FIG. 5, it is assumed that the first AP is the AP 1, the second AP is an AP 2, the BSS in which the AP 1 is located is the BSS 1, and a BSS in which the AP 2 is located is a BSS 2.

In this example, the AP 1 may perform location sensing on the AP 2, to determine a location of the AP 2 in the first coordinate system.

In this application, a method for the AP 1 to perform location sensing on the AP 2 may not be limited. For example, the AP 1 may perform location sensing on the AP 2 in a fingerprint recognition-based or CSI-based manner of positioning a single point based on a single point, or may perform location sensing on the AP 2 in a UWB or Wi-Fi trilateration-based manner of positioning a single point based on a plurality of points.

Optionally, when the AP 1 performs location sensing on the AP 2, the AP 1 may periodically perform location sensing on the AP 2. A sensing periodicity corresponding to the AP 2 may be preset.

Because a location of the AP 2 is fixed, the sensing periodicity corresponding to the AP 2 may be set to a large value. For example, the sensing periodicity corresponding to the AP 2 may be 300 ms.

Optionally, after performing location sensing on the AP 2, the AP 1 may obtain location information of the AP 2, and store a location of the AP 2 in the AP 1. The location information of the AP 2 indicates the location of the AP 2 in the first coordinate system.

Optionally, when storing the location information of the AP 2, the AP1 may use a media access control (media access control, MAC) address corresponding to the AP2 as a unique identity of the AP 2.

S403: Determine a location of a second STA in the first coordinate system, where the second STA accesses the network via the second AP.

In the method, the second AP and the second STA may be located in a same BSS. There may be at least one second STA.

As shown in FIG. 5, it is assumed that the second AP is the AP 2, the BSS in which the AP 2 is located is the BSS 2, and the BSS 2 further includes a STA 4. In this case, the second STA may include the STA 4.

In a possible implementation, a method in which the first AP determines the location of the second STA in the first coordinate system may include: obtaining first location information, where the first location information indicates a location of the first AP in a second coordinate system, and an origin of the second coordinate system is the second AP; obtaining second location information, where the second location information indicates a location of the second STA in the second coordinate system; and determining the location of the second STA in the first coordinate system based on the location of the second AP in the first coordinate system and the location of each device in the first AP and the second STA in the second coordinate system.

Optionally, the second coordinate system may be constructed by the second AP.

Optionally, the second coordinate system may be a two-dimensional coordinate system, or may be a three-dimensional coordinate system. The second coordinate system is similar to the first coordinate system, and a difference lies in that the origin of the second coordinate system is the second AP.

In the method, the first location information may be sent by the second AP. For example, the second AP may first determine the location of the first AP in the second coordinate system, and then send the first location information to the first AP. Correspondingly, the first AP receives the first location information.

For a method in which the second AP determines the location of the first AP in the second coordinate system, refer to the method in which the first AP determines the location of the second AP in the first coordinate system in S402. Details are not described herein again.

Optionally, after obtaining the first location information, the first AP may store the first location information locally.

In the method, the second location information may be sent by the second AP. For example, the second AP may first determine the location of the second STA in the second coordinate system, and then send an information frame to the second STA, where the information frame may carry the second location information. Correspondingly, the first AP may obtain the second location information in a listening manner.

For a method in which the second AP determines the location of the second STA in the second coordinate system, refer to the method in which the first AP determines the location of the first STA in the first coordinate system in S401. Details are not described herein again.

Optionally, after obtaining the second location information, the first AP may store the second location information locally.

Optionally, after obtaining the first location information, the first AP may further send third location information to the second AP, where the third location information indicates the location of the second AP in the first coordinate system.

In the method, when determining the location of the second STA in the first coordinate system based on the location of the second AP in the first coordinate system and the location of each device in the first AP and the second STA in the second coordinate system, the first AP may use a coordinate transformation method to transform the location of each device in the second STA in the second coordinate system into the location of the second STA in the first coordinate system.

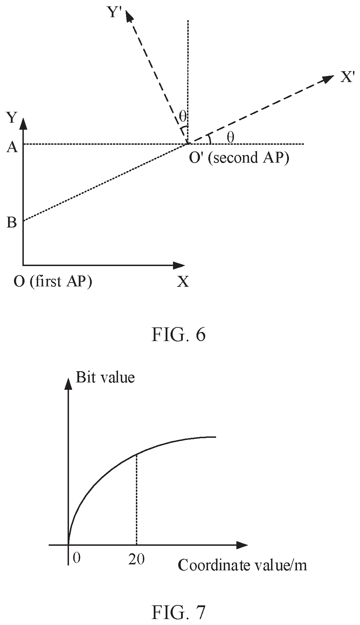

FIG. 6 is used as an example. It is assumed that XOY is the first coordinate system, and X'O'Y' is the second coordinate system. In this example, both the first coordinate system and the second coordinate system are two-dimensional coordinate systems.

It is assumed that coordinate location of the second AP in the first coordinate system is (a, b), coordinate location of the first AP in the second coordinate system is (c, d), coordinate location of the second STA in the second coordinate system is (*x', y*'), and coordinate location of the second STA in the first coordinate system is (*x, y*), where
a is a coordinate value of the second AP on the first coordinate axis in the first coordinate system, b is a coordinate value of the second AP on the second coordinate axis in the first coordinate system, c is a coordinate value of the first AP on a first coordinate axis in the second coordinate system, d is a coordinate value of the first AP on a second coordinate axis in the second coordinate system, *x'* is a coordinate value of the second STA on the first coordinate axis in the second coordinate system, *y'* is a coordinate value of the second STA on the second coordinate axis in the second coordinate system, *x* is a coordinate value of the second STA on the first coordinate axis in the first coordinate system, and *y* is a coordinate value of the second STA on the second coordinate axis in the first coordinate system.

It is assumed that a deflection angle between the first coordinate system and the second coordinate system is θ. In this case, the location of the second STA in the first coordinate system may satisfy the following formula: $\left\{\begin{matrix}x = x ′ cos \left(θ\right) - y ′ sin \left(θ\right) + a \\ y = x ′ sin \left(θ\right) + y ′ cos \left(θ\right) + b\end{matrix}\right.$

The deflection angle θ may satisfy the following formula: $θ = ∠ AO ′ B = actan \left(\frac{b}{a}\right) - actan \left(\frac{d}{c}\right)$

Formula (3) may be obtained by substituting Formula (2) into Formula (1): $\left\{\begin{matrix}x = x ′ cos \left(actan\left(\frac{b}{a}\right)-actan\left(\frac{d}{c}\right)\right) - y ′ sin \left(actan\left(\frac{b}{a}\right)-actan\left(\frac{d}{c}\right)\right) + a \\ y = x ′ sin \left(actan\left(\frac{b}{a}\right)-actan\left(\frac{d}{c}\right)\right) + y ′ cos \left(actan\left(\frac{b}{a}\right)-actan\left(\frac{d}{c}\right)\right) + b\end{matrix}\right.$

Formula (4) may be obtained by simplifying Formula (3): $\left\{\begin{matrix}x = \frac{- \left(ad-bc\right) y ′ - \left(ac+bd\right) x ′}{\sqrt{{a}^{2} + {b}^{2}} ⋅ \sqrt{{c}^{2} + {d}^{2}}} + a \\ y = \frac{\left(ad-bc\right) x ′ - \left(ac+bd\right) y ′}{\sqrt{{a}^{2} + {b}^{2}} ⋅ \sqrt{{c}^{2} + {d}^{2}}} + b\end{matrix}\right.$

By default, the first AP and the second AP are not at a same location, that is, a, b, c, and d in Formula (4) are not all zero.

Derivation processes of Formula (1) to Formula (4) may be implemented by the first AP, or may be implemented by a device other than the first AP. This is not limited in this application.

In the method, the first AP may determine the location of the second STA in the first coordinate system based on Formula (4).

For example, it is assumed that the coordinate location of the second AP in the first coordinate system is (-20, 30), the coordinate location of the first AP in the second coordinate system is (35, -8), and the coordinate location of the second STA in the second coordinate system is (5, 10). In this case, the coordinate location (-9, 33) of the second STA in the first coordinate system may be obtained through calculation based on Formula (4).

Optionally, when the first coordinate system and the second coordinate system are three-dimensional coordinate systems, a method for determining the location of the second AP in the first coordinate system is similar to the method used when the first coordinate system and the second coordinate system are two-dimensional coordinate systems. A difference lies in that, when the first coordinate system and the second coordinate system are three-dimensional coordinate systems, the first coordinate system and the second coordinate system each include three coordinate axes, and the deflection angle between the first coordinate system and the second coordinate system may include three deflection angles.

In some possible implementations, the location of each device in the first AP and the second STA in the second coordinate system may include a coordinate value of each device on each coordinate axis in the second coordinate system.

Optionally, the coordinate value of each device on each coordinate axis in the second coordinate system may be indicated in a first manner, and the first manner includes indicating the location by using a bit (bit) value.

Optionally, the bit value of the coordinate value of each device on each coordinate axis in the second coordinate system may be in a logarithmic relationship with the coordinate value of each device on each coordinate axis in the second coordinate system.

For example, the second coordinate system is a two-dimensional coordinate system. The location of the first AP in the second coordinate system includes a coordinate value of the first AP on the first coordinate axis in the second coordinate system and a coordinate value of the first AP on the second coordinate axis in the second coordinate system. The coordinate value of the first AP on the first coordinate axis in the second coordinate system may be represented by using a bit value, and the bit value of the coordinate value of the first AP on the first coordinate axis in the second coordinate system may be in a logarithmic relationship with the coordinate value of the first AP on the first coordinate axis in the second coordinate system. The coordinate value of the first AP on the second coordinate axis in the second coordinate system may also be represented by using a bit value, and the bit value of the coordinate value of the first AP on the second coordinate axis in the second coordinate system may be in a logarithmic relationship with the coordinate value of the first AP on the second coordinate axis in the second coordinate system.

The location of the second STA in the second coordinate system includes a coordinate value of the second STA on the first coordinate axis in the second coordinate system and a coordinate value of the second STA on the second coordinate axis in the second coordinate system. The coordinate value of the second STA on the first coordinate axis in the second coordinate system may be represented by using a bit value, and the bit value of the coordinate value of the second STA on the first coordinate axis in the second coordinate system may be in a logarithmic relationship with the coordinate value of the second STA on the first coordinate axis in the second coordinate system. The coordinate value of the second STA on the second coordinate axis in the second coordinate system may also be represented by using a bit value, and the bit value of the coordinate value of the second STA on the second coordinate axis in the second coordinate system may be in a logarithmic relationship with the coordinate value of the second STA on the second coordinate axis in the second coordinate system.

In the method, the coordinate value of each device in the first AP and the second STA on each coordinate axis in the second coordinate system may be represented by using the bit value of the coordinate value of each device on each coordinate axis in the second coordinate system, and the bit value of the coordinate value of each device on each coordinate axis in the second coordinate system may be in the logarithmic relationship with the coordinate value of each device on each coordinate axis in the second coordinate system. In this way, because a quantity of bits of the bit value may be a small quantity of bits, when the coordinate value of each device on each coordinate axis in the second coordinate system is indicated by using the bit value, a large coordinate value range may be represented by using the small quantity of bits. This helps reduce transmission overheads between the first AP and the second AP.

In addition, the bit value of the coordinate value of each device on each coordinate axis in the second coordinate system may be in the logarithmic relationship with the coordinate value of each device on each coordinate axis in the second coordinate system. In this way, location precision may be high when the coordinate value of each device on each coordinate axis in the second coordinate system is less than or equal to a preset distance threshold, or location precision may be low when the coordinate value of each device on each coordinate axis in the second coordinate system is greater than a preset distance threshold.

The location precision herein may represent a variation of the coordinate value of each device on each coordinate axis in the second coordinate system when the bit value of the coordinate value of each device on each coordinate axis in the second coordinate system increases by 1. In some embodiments, the location precision may also be referred to as representation precision or the like.

For example, it is assumed that a coordinate value of the AP 1 on the first coordinate axis in the second coordinate system is 10 m when a bit value of the coordinate value of the AP 1 on the first coordinate axis in the second coordinate system is 15, or a coordinate value of the AP 1 on the first coordinate axis in the second coordinate system is 11 m when a bit value of the coordinate value of the AP 1 on the first coordinate axis in the second coordinate system is 16. In this case, a value of the location precision is 1 m/bit.

A level of the location precision is associated with the value of the location precision. A smaller value of the location precision indicates that more bit values correspond to a same distance range, and the location precision is higher.

For any device, it is assumed that a coordinate value of the any device on any coordinate axis in the second coordinate system is greater than or equal to zero, a relationship between the coordinate value of the any device on the any coordinate axis in the second coordinate system and a bit value of the coordinate value of the any device on the any coordinate axis may be shown in FIG. 7.

In this example, a horizontal coordinate represents the coordinate value of the any device on the any coordinate axis in the second coordinate system, and a vertical coordinate represents the bit value of the coordinate value of the any device on the any coordinate axis in the second coordinate system. When the coordinate value of the any device on the any coordinate axis in the second coordinate system is less than or equal to the preset distance threshold, the coordinate value of the any device on the any coordinate axis in the second coordinate system may be represented by using a large quantity of bit values, and the location precision is high. When the coordinate value of the any device on the any coordinate axis in the second coordinate system is greater than the preset distance threshold, the coordinate value of the any device on the any coordinate axis in the second coordinate system may be represented by using a small quantity of bit values, and the location precision is low.

The preset distance threshold may be preset, and the preset distance threshold may be associated with a positioning distance. For example, in an indoor positioning scenario, an indoor positioning distance is usually less than or equal to 20 m, and the preset distance threshold may be 20 m.

It is assumed that when the preset distance threshold is 20 m, location precision in a case in which the coordinate value of the any device on the any coordinate axis in the second coordinate system is less than or equal to 20 m may be higher than location precision in a case in which the coordinate value of the any device on the any coordinate axis in the second coordinate system is greater than 20 m.

Optionally, when the coordinate value of the any device on any coordinate axis in the second coordinate system is less than zero, an absolute value of the coordinate value of the any device on the any coordinate axis in the second coordinate system may also be in a logarithmic relationship with a bit value of the absolute value of the coordinate value of the any device on the any coordinate axis in the second coordinate system.

Optionally, each piece of location information may further include indication information, and the indication information indicates whether the coordinate value of the any device on the any coordinate axis in the second coordinate system is greater than zero or less than zero.

In the indoor positioning scenario, because an indoor signal transmission distance is usually about 20 m, a large quantity of signals are usually transmitted within a range less than or equal to 20 m, and a small quantity of signals may be transmitted within a range exceeding 20 m. In this application, a larger quantity of bit values may be used to represent a distance range in which the large quantity of signals are transmitted, and a smaller quantity of bit values may be used to represent a distance range in which the small quantity of signals are transmitted. This helps improve data transmission accuracy.

Optionally, the relationship between the coordinate value of the any device on the any coordinate axis in the second coordinate system and the bit value of the coordinate value of the any device on the any coordinate axis in the second coordinate system may alternatively be represented in another manner, for example, a table or an expression.

For example, when the coordinate value of the any device on the any coordinate axis in the second coordinate system is greater than or equal to zero, the coordinate value of the any device on the any coordinate axis in the second coordinate system may be represented by *Pn,* and the bit value of the coordinate value of the any device on the any coordinate axis in the second coordinate system is represented by *Bn.* When a base of a logarithm is 2, *Bn* may satisfy Formula (5): $Bn = {log}_{2} \left(Pn+1\right)$

Further, the location precision may be adjusted by using a first parameter t1. In this case, *Bn* may satisfy Formula (6): $Bn = t 1 \times {log}_{2} \left(Pn+1\right)$

It is assumed that a maximum coordinate value of the any device on the any coordinate axis in the second coordinate system is S, and a quantity of bits of a bit value is N. In this case, the bit value corresponding to the maximum coordinate value of the any device on the any coordinate axis in the second coordinate system may be 2*^{N}* - 1, and 2*^{N}* - 1 may satisfy Formula (7): ${2}^{N} - 1 = t 1 \times {log}_{2} \left(S+1\right)$

Formula (8) may be obtained by rearranging Formula (7): $S = {2}^{\left(\frac{{2}^{N} - 1}{t 1}\right)} - 1$

Further, the maximum coordinate value that may be represented by the bit value may be limited by using a second parameter *t*2. The second parameter may satisfy Formula (9): $t 2 = \frac{S}{{2}^{\left(\frac{{2}^{N} - 1}{t 1}\right)} - 1}$

Correspondingly, *Bn* may satisfy Formula (10): $Bn = t 1 \times {log}_{2} \left(\frac{Pn}{t 2}+1\right)$

Formula (11) is obtained by adjusting Formula (10): $Pn = t 2 \times \left({2}^{\frac{Bn}{t 1}}-1\right)$

Optionally, a coordinate value corresponding to each bit value is associated with a value of the first parameter *t*1.

Derivation processes of Formula (5) to Formula (11) may be implemented by the first AP, or may be implemented by a device other than the first AP. This is not limited in this application.

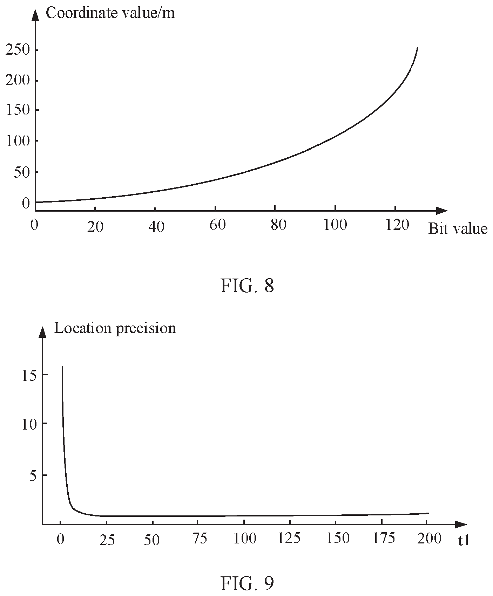

For example, it is assumed that the maximum coordinate value of the any device on the any coordinate axis in the second coordinate system is 250 m, the quantity of bits of the bit value is 7, and when *t*1=25, a relationship between the coordinate value of the any device on the any coordinate axis in the second coordinate system and the bit value of the coordinate value of the any device on the any coordinate axis may be shown in FIG. 8.

Optionally, the relationship between the coordinate value of the any device on the any coordinate axis in the second coordinate system and the bit value of the coordinate value of the any device on the any coordinate axis in the second coordinate system may alternatively be represented in another manner, for example, a table or an expression.

Optionally, the location precision may further represent a slope of the coordinate value of the any device on the any coordinate axis in the second coordinate system and the bit value of the coordinate value of the any device on the any coordinate axis in the second coordinate system. The location precision is associated with the value of the first parameter *t*1.

For example, a relationship between the location precision and the first parameter *t*1 may be shown in FIG. 9. In this example, when *t*1=25, the location precision is the highest, and is 0.76 m/bit, indicating that the coordinate value of the any device on the any coordinate axis in the second coordinate system correspondingly increases by 0.76 m when the bit value of the coordinate value of the any device on the any coordinate axis in the second coordinate system increases by 1.

Optionally, the relationship between the location precision and the first parameter *t*1 may be alternatively represented in another manner, for example, a table or an expression.

Optionally, the location of the second AP in the first coordinate system may include a coordinate value of the second AP on the first coordinate axis in the first coordinate system and a coordinate value of the second AP on the second coordinate axis in the first coordinate system. The coordinate value of the second AP on the first coordinate axis in the first coordinate system may also be represented by using a bit value, and the bit value of the coordinate value of the second AP on the first coordinate axis in the first coordinate system is in a logarithmic relationship with the coordinate value of the second AP on the first coordinate axis in the first coordinate system. The coordinate value of the second AP on the second coordinate axis in the first coordinate system may also be represented by using a bit value, and the bit value of the coordinate value of the second AP on the second coordinate axis in the first coordinate system is in a logarithmic relationship with the coordinate value of the second AP on the second coordinate axis in the first coordinate system.

In some possible implementations, each of the first location information and the second location information may be transmitted via a first-type data frame, the first-type data frame includes a first field and a second field, the first field may be used to store the bit value of the location, and the second field may indicate that the first-type data frame includes the first field.

For example, the first-type data frame may be a data frame in a physical layer protocol data unit (physical layer protocol data unit, PPDU) frame format.

FIG. 10 is a diagram of a PPDU frame format. In this example, the PPDU frame format may include a physical layer (PHY) header field, a data (data) field, and a packet extension (PE) field. The data field may include a MAC header. The PHY header may include a legacy short training field (L-STF), a legacy long training field (L-LTF), a legacy signal (L-SIG) field, a repeated legacy signal (RL-SIG) field, a high efficiency signal-A (HE-SIG-A) field, a high efficiency short training field (HE-STF), a high efficiency long training field (HE-LTF), and the like.

Optionally, the first field and the second field may be located in the MAC header.

FIG. 11 is a diagram of a MAC header. In this example, the MAC header may include a frame control (frame control) field, a duration/ID (duration/ID) field, an address (address) 1 field, an address 2 field, an address 3 field, a sequence control (sequence control) field, an address 4 field, a quality of service control (quality of Service control, QOS control) field, a high-throughput control (high-throughput control, HT control) field, a frame body (frame body) field, a frame check sequence (FCS) field, and the like.

Optionally, the first field may be the HT control field in the MAC header, and the second field may be the frame control field in the MAC header. Optionally, in some embodiments, the second field may be a +HTC/Order field (not shown in FIG. 11) in the frame control field in the MAC header.

In this example, a value of the second field may be 1 or 0. When the value of the second field is 1, it indicates that the MAC header includes the first field. When the value of the second field is 0, it indicates that the MAC header does not include the first field.

In this example, information in the MAC header may not be encrypted.

Optionally, the first-type data frame may further include a third field, the third field stores first indication information and second indication information, the first indication information may indicate whether a device supports construction of a digital map, and the second indication information may indicate whether the first-type data frame includes the bit value of the location.

Optionally, the third field may be located in the PHY header.

FIG. 12 is a diagram of a PHY header. In this example, the third field may be an HE-SIG-A field (or a SIG-A field field) at a PHY layer.

In this example, the third field may include two bits, the first bit may be the first indication information, and a value of the first indication information may be 1 or 0. When the value of the first indication information is 1, it indicates that the device supports construction of the digital map; or when the value of the first indication information is 0, it indicates that the device does not support construction of the digital map.

The second bit may be the second indication information, and a value of the second indication information may also be 1 or 0. When the value of the second indication information is 1, it indicates that the first-type data frame includes the bit value of the location; or when the value of the second indication information is 0, it indicates that the first-type data frame does not include the bit value of the location.

Optionally, the first-type data frame may include a first data frame and a second data frame.

In this application, when the second AP sends the first location information to the first AP, the first location information may be transmitted via the first data frame.

FIG. 13 is a diagram of a first data frame. In this example, the first data frame may include one MAC header, the MAC header includes the first field and the second field, the first field stores the bit value of the location of the first AP in the second coordinate system, and the second field indicates that the first data frame includes the first field. The location of the first AP in the second coordinate system includes a coordinate value of the first AP on the first coordinate axis in the second coordinate system and a coordinate value of the first AP on the second coordinate axis in the second coordinate system. In the method, when receiving the first data frame, the first AP may first determine, based on the second field in the first data frame, whether the first data frame includes the first field, and then obtain the first location information from the first field when determining that the first data frame includes the first field, thereby avoiding some unnecessary resource waste.

In addition, because the information in the MAC header may not be encrypted, the first AP can easily listen to and obtain the first location information through parsing.

The first data frame further includes a PHY header, and an HE-SIG-A field in the PHY header may include the third field. A bit value of the third field may be 11, indicating that the second AP supports construction of the digital map. The first data frame includes the bit value of the location of the first AP in the second coordinate system.

In the method, when receiving the first data frame, the first AP may first determine, based on the third field in the first data frame, whether the first data frame includes the first location information, and then obtain the first location information from the first field in the first data frame when determining that the first data frame includes the first location information, thereby avoiding some unnecessary resource waste.

Optionally, the first location information may alternatively be transmitted via an empty data frame that includes only a MAC header. This helps reduce the transmission overheads.

Optionally, after receiving the first location information, the first AP may further send the third location information to the second AP, where the third location information indicates the location of the second AP in the first coordinate system.

Optionally, the first-type data frame may further include a third data frame, and the third location information may be transmitted via the third data frame. A structure of the third data frame is similar to that of the first data frame, but location information stored in the third data frame is different from that stored in the first data frame.

For a method in which the first AP sends the third location information to the second AP, refer to the method in which the second AP sends the first location information to the first AP. Details are not described herein again.

In this application, when the second AP sends the second location information, the second location information may be transmitted via the second data frame.

FIG. 14 is a diagram of a second data frame. In this example, the second data frame may include at least one MAC header, a 1^{st} MAC header in the at least one MAC header may include the first field and the second field, the first field stores the bit value of the location of the second STA in the second coordinate system, and the second field indicates that the first data frame includes the first field. The location of the second STA in the second coordinate system includes a coordinate value of the second STA on the first coordinate axis in the second coordinate system and a coordinate value of the second STA on the second coordinate axis in the second coordinate system.

In the method, when receiving the second data frame, the first AP may first determine, based on the second field in the second data frame, whether the second data frame includes the first field, and then obtain the second location information from the first field when determining that the second data frame includes the first field, thereby avoiding some unnecessary resource waste.

In the method, because the information in the MAC header may not be encrypted, the first AP can easily listen to and parse the second location information. In addition, the second location information may not be carried in each MAC header, to be specific, the second location information is carried in a first MAC header. This helps reduce data transmission overheads.

The second data frame further includes a PHY header, and an HE-SIG-A field in the PHY header may include the third field. The bit value of the third field may be 11, indicating that the second AP supports construction of the digital map. The first data frame includes the bit value of the location of the second STA in the second coordinate system.

In the method, when receiving the second data frame, the first AP may first determine, based on the third field in the second data frame, whether the second data frame includes the second location information, and then obtain the second location information from the first field in the second data frame when determining that the second data frame includes the second location information, thereby avoiding some unnecessary resource waste.

In this application, each AP in a communication system may construct the digital map.

For example, the digital map constructed by the first AP includes a location of the first AP in the first coordinate system.

Optionally, the digital map constructed by the first AP may further include one or more of the following information: the location of the first STA in the first coordinate system, the location of the second AP in the first coordinate system, or the location of the second STA in the first coordinate system.

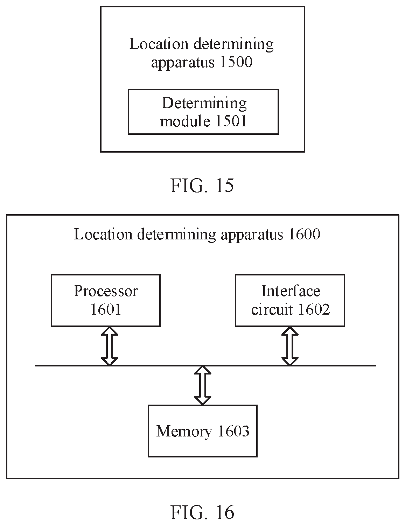

FIG. 15 is a diagram of a location determining apparatus according to an embodiment of this application. As shown in FIG. 15, the location determining apparatus 1500 may include a determining module 1501.

For example, the location determining apparatus 1500 may be configured to implement the method in the embodiment shown in FIG. 4. The determining module 1501 may be configured to perform S401, S402, and S403.

FIG. 16 is a diagram of a location determining apparatus according to another embodiment of this application. As shown in FIG. 16, the location determining apparatus 1600 includes a processor 1601 and an interface circuit 1602. The processor 1601 and the interface circuit 1602 are coupled to each other. It may be understood that the interface circuit 1602 may be a transceiver or an input/output interface. Optionally, the location determining apparatus 1600 may further include a memory 1603, configured to: store instructions executed by the processor 1601, store input data required for running instructions by the processor 1601, or store data generated after the processor 1601 runs instructions.

For example, the processor 1601 may be configured to implement a function of the determining module 1501.

For example, the location determining apparatus 1600 may be used in a first AP. Specifically, the location determining apparatus 1600 may be the first AP, or may be a chip used in the first AP.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, the procedures or functions according to embodiments of this application are completely or partially executed. The computer may be a general-purpose computer, a special-purpose computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A location determining method, wherein the method comprises:
determining a location of a first station STA in a first coordinate system, wherein the first STA accesses a network via a first access point AP, and an origin of the first coordinate system is the first AP;
determining a location of a second AP in the first coordinate system; and
determining a location of a second STA in the first coordinate system, wherein the second STA accesses the network via the second AP.

2. The method according to claim 1, wherein determining the location of the second STA in the first coordinate system comprises:
obtaining first location information, wherein the first location information indicates a location of the first AP in a second coordinate system, and an origin of the second coordinate system is the second AP;
obtaining second location information, wherein the second location information indicates a location of the second STA in the second coordinate system; and
determining the location of the second STA in the first coordinate system based on the location of the second AP in the first coordinate system and the location of each device in the first AP and the second STA in the second coordinate system.

3. The method according to claim 2, wherein the location of the second AP in the first coordinate system satisfies the following formula: $\left\{\begin{matrix}x = \frac{- \left(ad-bc\right) y ′ - \left(ac+bd\right) x ′}{\sqrt{{a}^{2} + {b}^{2}} ⋅ \sqrt{{c}^{2} + {d}^{2}}} + a \\ y = \frac{\left(ad-bc\right) x ′ - \left(ac+bd\right) y ′}{\sqrt{{a}^{2} + {b}^{2}} ⋅ \sqrt{{c}^{2} + {d}^{2}}} + b\end{matrix}\right. ,$ wherein
a is a coordinate value of the second AP on a first coordinate axis in the first coordinate system, b is a coordinate value of the second AP on a second coordinate axis in the first coordinate system, c is a coordinate value of the first AP on a first coordinate axis in the second coordinate system, d is a coordinate value of the first AP on a second coordinate axis in the second coordinate system, *x'* is a coordinate value of the second STA on the first coordinate axis in the second coordinate system, *y'* is a coordinate value of the second STA on the second coordinate axis in the second coordinate system, *x* is a coordinate value of the second STA on the first coordinate axis in the first coordinate system, and *y* is a coordinate value of the second STA on the second coordinate axis in the first coordinate system.

4. The method according to claim 2 or 3, wherein the location of each device in the second coordinate system comprises a coordinate value of the device on each coordinate axis in the second coordinate system, the coordinate value of each device on each coordinate axis in the second coordinate system is indicated in a first manner, and the first manner comprises indicating the location by using a bit value.

5. The method according to claim 4, wherein a bit value of the coordinate value of each device on each coordinate axis in the second coordinate system is in a logarithmic relationship with the coordinate value of each device on each coordinate axis in the second coordinate system.

6. The method according to claim 4 or 5, wherein each of the first location information and the second location information is transmitted via a first-type data frame, the first-type data frame comprises a first field and a second field, the first field stores a bit value of a location, and the second field indicates that the first-type data frame comprises the first field.

7. The method according to claim 6, wherein the first-type data frame comprises a media access control MAC header, and the first field and the second field are located in the MAC header.

8. The method according to claim 6 or 7, wherein the first-type data frame further comprises a third field, the third field stores first indication information and second indication information, the first indication information indicates that a device supports construction of a digital map, and the second indication information indicates that the first-type data frame comprises the bit value of the location.

9. The method according to claim 8, wherein the third field is located in a physical layer PHY header.

10. A location determining apparatus, comprising a functional module configured to implement the method according to any one of claims 1 to 9.

11. A location determining apparatus, comprising a memory and a processor, wherein
the memory is configured to store program instructions; and
the processor is configured to execute the program instructions in the memory, to implement the method according to any one of claims 1 to 9.

12. A computer-readable storage medium, wherein the computer-readable storage medium stores program code executed by a computer, and the program code comprises instructions used to implement the method according to any one of claims 1 to 9.

13. A computer program product, wherein the computer program product comprises instructions used to implement the method according to any one of claims 1 to 9.
